# EUROPÄISCHE PATENTSCHRIFT

(11) **EP 3 400 797 B1**
(45) Veröffentlichungstag und Bekanntmachung des Hinweises auf die Patenterteilung: **21.07.2021**
(21) Anmeldenummer: 18171037.7
(22) Anmeldetag: 07.05.2018
(51) Int. Cl.: A01M 7/00, A01B 69/00, B62D 49/06, G05D 1/02

(54) **LANDWIRTSCHAFTLICHE ARBEITSMASCHINE**
AGRICULTURAL MACHINE
ENGIN AGRICOLE

(30) Priorität: 10.05.2017 DE 102017110159
(43) Veröffentlichungstag der Anmeldung: 14.11.2018
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Müller, Ralf, 39217 Schönbeck/OT Pretzien (DE); Ehlert, Christian, 33719 Bielefeld (DE); Mörsch, Claus, 33449 Langenberg (DE); Schütte, Robin, 33142 Weine (DE)
(74) Vertreter: CLAAS Gruppe

(56) Entgegenhaltungen:
- EP-B1- 0 201 658
- CN-A- 106 572 630
- DE-A1-102005 031 134
- DE-A1-102012 107 551
- US-B2- 8 583 326

## Beschreibung

Die Erfindung betrifft eine landwirtschaftliche Arbeitsmaschine nach dem Oberbegriff des Anspruchs 1.

Aus dem Stand der Technik (EP 0 201 658 B1) ist eine landwirtschaftliche Arbeitsmaschine in Form eines Traktors bekannt, die ein elektronisches Dosiersystem für anbaubare Arbeitsaggregate in Form von Anbauverteilsystemen aufweist. Die landwirtschaftliche Arbeitsmaschine kann mit verschiedenen solcher Anbauverteilsysteme ausgestattet werden. Ein Steuer- und Regelsystem ist dabei mit einem Steuergerät mit Mikroprozessor versehen, in dem verschiedene Steuerungsprogramme des jeweiligen Steuergeräts hinterlegt sind, welche je nach angebauter Verteilmaschine abgerufen werden können. Der Begriff "Steuerungsprogramm" ist hier weit zu verstehen und umfasst unter anderem Programme zur Steuerung und Programme zur Regelung von internen Arbeitsaggregaten oder externen Arbeitsaggregaten (Anbaugeräten) der landwirtschaftlichen Arbeitsmaschine. Als Steuerungsprogramm wird jedoch zur jeweiligen Steuerung des internen oder externen Arbeitsaggregats ein Einheitssteuerungsprogramm genutzt, d. h. ein Steuerungsprogramm, welches für alle Betriebszustände des jeweiligen Arbeitsaggregats der landwirtschaftlichen Arbeitsmaschine ausreichen muss.

Aus der DE 10 2012 107 551 A1 ist eine landwirtschaftliche Arbeitsmaschine gemäß dem Oberbegriff des Anspruches 1 bekannt.

Nachteilig ist hierbei, dass ein solches einheitliches Steuerungsprogramm, da es alle Betriebszustände der internen und externen Arbeitsaggregate abdecken muss, unter Berücksichtigung unterschiedlicher Zielkonflikte keine optimale Steuerung gewährleisten kann.

Der Erfindung liegt das Problem zugrunde, eine landwirtschaftliche Arbeitsmaschine bereitzustellen, die eine optimierte Steuerung der landwirtschaftlichen Arbeitsmaschine bzw. der verschiedenen anbaubaren Arbeitsaggregate gewährleistet.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Bei der vorschlagsgemäßen landwirtschaftlichen Arbeitsmaschine handelt es sich insbesondere um einen Traktor. Grundsätzlich ist die vorschlagsgemäße Lösung auch auf jedwede andere landwirtschaftliche Arbeitsmaschine, beispielsweise Mähdrescher oder Feldhäcksler, anwendbar. Die landwirtschaftliche Arbeitsmaschine weist ein Steuer- und Regelsystem zur Steuerung und Regelung mindestens eines Arbeitsaggregats zur Durchführung oder Unterstützung eines landwirtschaftlichen Arbeitsauftrags auf. Unter dem Begriff "Arbeitsaggregat" werden sowohl interne Arbeitsaggregate bzw. Komponenten der landwirtschaftlichen Arbeitsmaschine, wie beispielsweise der Fahrantriebsmotor oder das Fahrgetriebe, als auch externe Arbeitsaggregate (anbaubare Arbeitsaggregate), wie beispielsweise ein Pflug oder eine Ballenpresse, verstanden.

Wesentlich bei der vorschlagsgemäßen landwirtschaftlichen Arbeitsmaschine ist nun, dass mehrere Steuergeräte des Steuer- und Regelsystems jeweils ein Steuerungsprogramm aufweisen, das in Abhängigkeit eines landwirtschaftlichen Arbeitsauftrags, in Abhängigkeit eines anbaubaren Arbeitsaggregats (bzw. Anbaugeräts) und/oder in Abhängigkeit einer einen landwirtschaftlichen Arbeitsauftrag betreffenden Bedienereingabe konfigurierbar und/oder ladbar ist. Das Steuerungsprogramm kann also konkret für einen speziellen landwirtschaftlichen Arbeitsauftrag und/oder ein entsprechendes Anbaugerät in das jeweilige Steuergerät geladen werden oder arbeitsauftragsspezifisch bzw. arbeitsaggregatspezifisch konfiguriert bzw. programmiert werden. Das Steuer- und Regelsystem weist mehrere Steuergeräte auf, die bzw. deren Steuerungsprogramme jeweils einem konkreten Arbeitsauftrag und/oder Arbeitsaggregat zugeordnet sind. Dabei kann ein anbaubares Arbeitsaggregat von dem Steuer- und Regelsystem bzw. dem Steuerungsprogramm vorzugsweise automatisch beim Anschluss an die landwirtschaftliche Arbeitsmaschine erkannt werden, woraufhin dann das Steuer- und Regelsystem, vorzugsweise auch automatisch, auf den landwirtschaftlichen Arbeitsauftrag schließt und das jeweilige Steuerungsprogramm entsprechend konfiguriert und/oder lädt. Zusätzlich oder alternativ kann von der Bedienperson auch eine entsprechende Bedienereingabe gemacht werden, die den landwirtschaftlichen Arbeitsauftrag betrifft, beispielsweise indem die Bedienperson den auszuführenden landwirtschaftlichen Arbeitsauftrag und/oder das einzusetzende Anbaugerät in das Steuer- und Regelsystem bzw. eine damit kommunizierende Ein-/Ausgabeeinheit eingibt oder dort aus einer oder mehreren vorgegebenen, angezeigten Möglichkeiten den auszuführenden landwirtschaftlichen Arbeitsauftrag und/oder das einzusetzende Anbaugerät auswählt und/oder bestätigt.

Die vorschlagsgemäße landwirtschaftliche Arbeitsmaschine hat durch das bzw. die jeweiligen speziellen Steuerungsprogramme den Vorteil, dass für unterschiedliche landwirtschaftliche Arbeitsaufträge und entsprechend unterschiedliche zu verwendende Anbaugeräte jeweils ein speziell angepasstes und für diesen Fall optimiertes Steuerungsprogramm und/oder Steuergerät zur Verfügung steht und damit unter Berücksichtigung unterschiedlicher Zielvorgaben immer eine optimale Steuerung gewährleisten kann. Dies entlastet wiederum auch die Bedienperson und führt zu einer Steigerung der Effizienz bei der Ausführung des jeweiligen landwirtschaftlichen Arbeitsauftrags.

Bei der Ausgestaltung gemäß Anspruch 2 weist die landwirtschaftliche Arbeitsmaschine, beispielsweise als Teil eines Fahrerassistenzsystems, eine Ein-/Ausgabeeinheit zur Vornahme von einen landwirtschaftlichen Arbeitsauftrag betreffenden Eingaben durch die Bedienperson auf. Die Ein-/Ausgabeeinheit kann auch zur Anzeige von Eingaben ermöglichenden virtuellen Bedienelementen, beispielsweise Drag&Drop-Bedienelementen und/oder virtuellen Tasten, ausgebildet sein. Auch kann vorgesehen sein, dass die Ein-/Ausgabeeinheit die Anzeige von Informationen ermöglicht, die vorzunehmenden Einstellungen und/oder vorgenommenen Eingaben entsprechen. Die Bedienperson kann also Texteingaben und/oder symbolbasierte Eingaben vornehmen und/oder aus einer Gruppe von Auswahlmöglichkeiten, die von der Ein-/Ausgabeeinheit vorgegeben und angezeigt werden, auswählen.

Die Ansprüche 3 bis 5 betreffen unterschiedliche Ausgestaltungen und Funktionsweisen des Steuer- und Regelsystems der vorschlagsgemäßen landwirtschaftlichen Arbeitsmaschine, die den Prozess des Konfigurierens und/oder Ladens des Steuerungsprogramms optimieren.

Bei der Ausgestaltung gemäß Anspruch 6 ist die Möglichkeit definiert, Betriebsparameter der landwirtschaftlichen Arbeitsmaschine und/oder Umgebungsparameter, beispielsweise des Geländes, beim Konfigurieren und/oder Laden des Steuerungsprogramms ebenfalls zu berücksichtigen. Die Betriebsparameter können insbesondere dazu verwendet werden, eine Vorhersage über zu erwartende Belastungszustände für einen jeweiligen Arbeitsauftrag zu ermöglichen und diese insbesondere im Steuerungsprogramm zu berücksichtigen (Anspruch 7). Die Betriebsparameter können in einer internen Datenbank, d. h. in einer Datenbank der landwirtschaftlichen Arbeitsmaschine, oder einer externen Datenbank, die sich außerhalb der landwirtschaftlichen Arbeitsmaschine befindet, gespeichert werden bzw. gespeichert sein. Die einzelnen Parameter können dabei im Vorfeld der Konfiguration und/oder des Ladens des Steuerungsprogramms in der Datenbank abgelegt und/oder aktualisiert worden sein, beispielsweise im Zuge eines früheren landwirtschaftlichen Arbeitsauftrags desselben Typs. Beispiele für den oder die Betriebsparameter der landwirtschaftlichen Arbeitsmaschine, die bei der Auswahl und/oder Anpassung des Steuerungsprogramms zugrunde gelegt werden können, sind die durchschnittliche Fahrgeschwindigkeit (Arbeitsgeschwindigkeit) der landwirtschaftlichen Arbeitsmaschine, der durchschnittliche Leistungsbedarf des anbaubaren Arbeitsaggregats, die durchschnittliche Leistungsschwankung des anbaubaren Arbeitsaggregats, die Arbeitstiefe des anbaubaren Arbeitsaggregats, beispielsweise beim Pflügen, das Gewicht der landwirtschaftlichen Arbeitsmaschine, insbesondere einschließlich des angebauten Arbeitsaggregats, und/oder das Gewicht des zu verwendenden anbaubaren Arbeitsaggregats. Beispiele für den oder die Umgebungsparameter, die zugrunde gelegt werden können, sind das Vorhandensein oder Nichtvorhandensein eines Feldes, die Bodenart, der Bodenzustand, die Bodenfeuchte, die Hügeligkeit des Geländes, die Erntegutart, die Erntegutfeuchtigkeit und/oder das Vorhandensein oder Nichtvorhandensein eines Vorgewendes.

Anspruch 8 definiert, dass das Steuer- und Regelsystem zwischen einem Vorbereitungsmodus und einem Arbeitsmodus umschaltbar ist. Der Vorbereitungsmodus erlaubt es, das Steuerungsprogramm, wie zuvor erläutert, zu konfigurieren und/oder zu laden. Im Arbeitsmodus wird das solchermaßen konfigurierte und/oder geladene Steuerungsprogramm ausgeführt. Zusätzlich oder alternativ erlaubt es der Arbeitsmodus, den mindestens einen Betriebsparameter und/oder Umgebungsparameter während des Ausführens des landwirtschaftlichen Arbeitsauftrags zu erfassen und/oder zu speichern. Der jeweilige Betriebsparameter kann dann unmittelbar im Arbeitsmodus oder aber für ein späteres Konfigurieren und/oder Laden eines Steuerungsprogramms für einen nachfolgenden landwirtschaftlichen Arbeitsauftrag zugrunde gelegt werden.

Anspruch 9 definiert verschiedene landwirtschaftliche Arbeitsaufträge, die bedienerseitig eingegeben oder ausgewählt oder automatisch vom Steuer- und Regelsystem ausgewählt werden können. Anspruch 10 definiert entsprechende Arbeitsaggregate zur Durchführung des landwirtschaftlichen Auftrags. Arbeitsaggregate können beispielsweise sein: für den Arbeitsauftrag "Frontladen von Schüttgut" eine Frontladeschaufel, für den Arbeitsauftrag "Stapeln von Gegenständen" eine Staplergabel, für den Arbeitsauftrag "Silageschieben" ein Silage- bzw. Futterschieber, für den Arbeitsauftrag "Bodenbearbeitung" ein Pflug, ein Grubber etc. oder für den Arbeitsauftrag "Transport" ein Anhänger.

Die Ansprüche 11 bis 16 definieren verschiedene Steuerungs- und Regelungsmöglichkeiten der landwirtschaftlichen Arbeitsmaschine und/oder des jeweils angebauten Arbeitsaggregats durch das jeweils arbeitsauftragsspezifische oder arbeitsaggregatspezifische Steuerungsprogramm. So kann durch das Steuerungsprogramm ein Fahrerassistenzsystem und/oder ein Getriebe, insbesondere des Fahrantriebs, der landwirtschaftlichen Arbeitsmaschine gesteuert werden (Anspruch 11), es können das Anfahr-, Wende-, Verzögerungs-, Beschleunigungs- und/oder Rückwärtsfahrverhalten, der Drehmomentaufbau, die Wahl der Getriebeübersetzung, die Wahl der Motordrehzahl, der Anfahrgang und/oder die Schaltstrategie beeinflusst werden (Anspruch 12 und 13), es können bedienerseitige Änderungen des Ausgangsdrehmoments der landwirtschaftlichen Arbeitsmaschine zugelassen oder verhindert werden (Anspruch 14), es können externe auftragsspezifische Störungen im Vorfeld oder bei der Ausführung des landwirtschaftlichen Auftrags berücksichtigt werden und/oder durchschnittliche Fahrgeschwindigkeit, der durchschnittliche Leistungsbedarf des anbaubaren Arbeitsaggregats, die durchschnittliche Leistungsschwankung des anbaubaren Arbeitsaggregats, und/oder Ölumlauf angepasst werden (Anspruch 15) und/oder es kann das Starverhalten und/oder Einkuppelverhalten einer Zapfwelle angepasst werden (Anspruch 16).

Im Folgenden wird die Erfindung anhand einer lediglich Ausführungsbeispiele darstellenden Zeichnung näher erläutert. In der Zeichnung zeigt
- Fig. 1: in a) eine schematische Ansicht eines ersten Ausführungsbeispiels einer vorschlagsgemäßen landwirtschaftlichen Arbeitsmaschine und in b) eine schematische Ansicht eines zweiten Ausführungsbeispiels einer vorschlagsgemäßen landwirtschaftlichen Arbeitsmaschine und
- Fig. 2: eine schematische Darstellung des grundsätzlichen Ablaufs der Konfigurierung eines Steuer- und Regelsystems einer landwirtschaftlichen Arbeitsmaschine gemäß Fig. 1a) und b).

Die vorschlagsgemäße landwirtschaftliche Arbeitsmaschine 1 erlaubt eine arbeitsauftragsspezifische und/oder anbaugerätspezifische bzw. arbeitsaggregatspezifische Konfigurierung eines Steuer- und Regelsystems 2, das zur Steuerung und Regelung mindestens eines internen oder externen Arbeitsaggregats 3a, 3b zur Durchführung oder Unterstützung eines landwirtschaftlichen Arbeitsauftrags vorgesehen ist. Bei einem Frontlader wird beispielsweise als externes Arbeitsaggregat 3b die Frontladeschaufel 5b und als für diesen Anwendungsfall zugeordnetes internes Arbeitsaggregat der Fahrantriebsmotor und/oder das Fahrgetriebe (nicht dargestellt) gesteuert bzw. geregelt, letzteres insbesondere zur Veränderung oder Begrenzung der Motordrehzahl und darüber Beeinflussung des Abtriebsdrehmoments und/oder der Hydraulik.

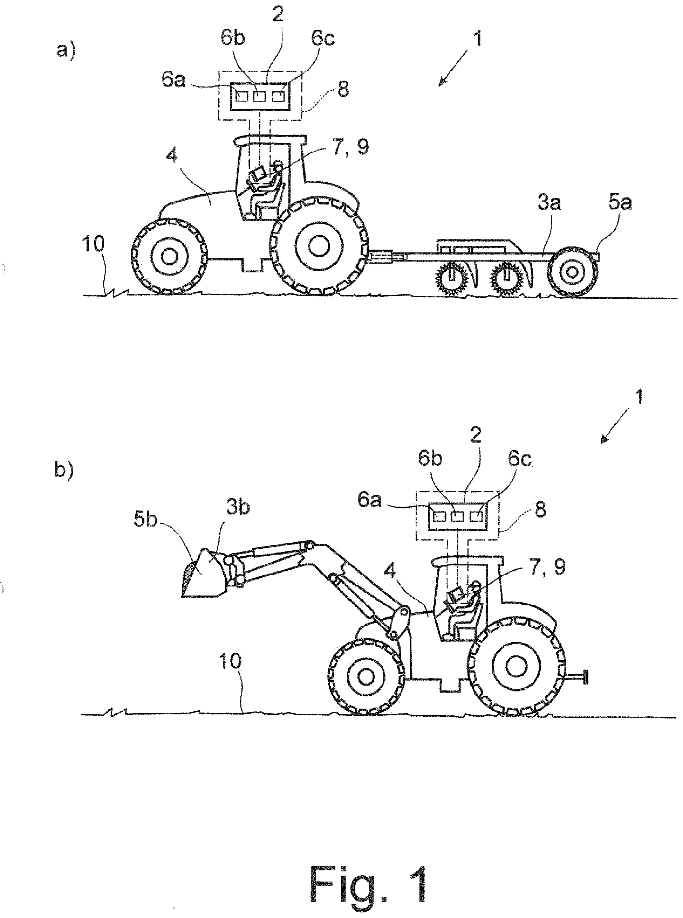

In Fig. 1 ist dargestellt, wie eine landwirtschaftliche Arbeitsmaschine 1, hier und vorzugsweise ein Traktor 4, mit einem angebauten Arbeitsaggregat 3a, 3b, auch Anbaugerät genannt, einen bestimmten landwirtschaftlichen Arbeitsauftrag ausführt. So wird in Fig. 1a) als landwirtschaftlicher Arbeitsauftrag beispielhaft eine Bodenbearbeitung, nämlich hier mittels eines Grubbers 5a als Arbeitsaggregat 3a, durchgeführt, wohingegen in Fig. 1b) als Arbeitsauftrag beispielhaft das Frontladen von Schüttgut mittels einer Frontladeschaufel 5b als Arbeitsaggregat 3b durchgeführt wird.

Wesentlich ist nun, dass das Steuer- und Regelsystem 2 der landwirtschaftlichen Arbeitsmaschine 1, hier des Traktors 4, in der Lage ist, sowohl während eines ersten landwirtschaftlichen Arbeitsauftrags das zugeordneten externe Arbeitsaggregat 3a in Form des Grubbers 5a und/oder ein zugeordnetes internes Arbeitsaggregat, z.B. Fahrantriebsmotor und/oder Fahrgetriebe, als auch während eines zweiten landwirtschaftlichen Arbeitsauftrags das zugeordnete externe Arbeitsaggregat 3b in Form der Frontladeschaufel 5b und/oder ein zugeordnetes internes Arbeitsaggregat, z.B. Fahrantriebsmotor und/oder Fahrgetriebe, jeweils optimal zu steuern bzw. zu regeln. Dazu ist vorschlagsgemäß vorgesehen, dass das Steuer- und Regelsystem 2 mindestens ein Steuergerät 6a, 6b, 6c, hier drei Steuergeräte 6a, 6b, 6c, aufweist, das bzw. die jeweils ein Steuerungsprogramm aufweist bzw. aufweisen. Dabei ist es denkbar, dass ein einzelnes Steuergerät 6a, 6b, 6c für jeweils verschiedene Arbeitsaggregate 3a, 3b als gemeinsames Steuergerät vorgesehen ist oder je anbaubarem Arbeitsaggregat 3a, 3b, 3c ein eigenes Steuergerät 6a, 6b, 6c vorgesehen ist. Das Steuerungsprogramm des jeweiligen Steuergeräts 6a, 6b, 6c ist vorschlagsgemäß in Abhängigkeit eines landwirtschaftlichen Arbeitsauftrags, eines anbaubaren Arbeitsaggregats bzw. Anbaugeräts 3a, 3b und/oder einer einen landwirtschaftlichen Arbeitsauftrag betreffenden Bedienereingabe konfigurierbar und/oder in das jeweilige Steuergerät 6a, 6b, 6c ladbar.

Nach erfolgter Eingabe oder Auswahl von einem konkreten landwirtschaftlichen Arbeitsauftrag und/oder anbaubaren Arbeitsaggregat 3a, 3b erfolgt das Konfigurieren und/oder Laden des zugeordneten Steuerungsprogramms, insbesondere automatisiert, d. h. ohne die Notwendigkeit weiterer Bedienereingaben. Es ist aber auch möglich, dass die Bedienperson noch weitere Bedienereingaben tätigt, beispielsweise eine einen landwirtschaftlichen Arbeitsauftrag betreffende Arbeitsstrategie und/oder Bedingung eingibt oder auswählt.

Als mögliche auszuführende landwirtschaftliche Arbeitsaufträge seien beispielhaft und nicht abschließend das Frontladen von Schüttgut (Mieten), das Stapeln von Gegenständen wie Ballen, Kisten o. dgl., das Silageschieben, die Bodenbearbeitung wie beispielsweise Pflügen oder Grubbern, und der Transport, beispielsweise mittels eines Anhängers, genannt.

Um nun den Bediener zu entlasten und die Effizienz der einzelnen Arbeitsaufträge jeweils zu erhöhen, wird ein Steuerungsprogramm individuell für den jeweils auszuführenden (geplanten) landwirtschaftlichen Arbeitsauftrag in das jeweilige Steuergerät 6a, 6b, 6c geladen und/oder arbeitsauftragsspezifisch bzw. arbeitsaggregatspezifisch angepasst. Es ist somit kein übergeordnetes "Einheitssteuerungsprogramm" notwendig bzw. vorgesehen, um die einzelnen Betriebszustände der diversen anbaubaren Arbeitsaggregate 3a, 3b abzudecken, sondern es ist immer ein für den konkreten Zweck optimiertes Steuerungsprogramm vorgesehen.

Um das jeweilige Steuerungsprogramm laden und/oder konfigurieren zu können, weist die landwirtschaftliche Arbeitsmaschine 1 hier und vorzugsweise eine Ein-/Ausgabeeinheit 7 auf, die hier Teil eines Fahrerassistenzsystems 8 ist. Die Ein-/Ausgabeeinheit 7 ist zur Vornahme von einen landwirtschaftlichen Arbeitsauftrag betreffenden Bedienereingaben und/oder zur Anzeige von Eingaben ermöglichenden virtuellen Bedienelementen und/oder zur Anzeige von vorzunehmenden Einstellungen und/oder vorgenommenen Eingaben entsprechenden Informationen ausgebildet. Insbesondere weist die Ein-/Ausgabeeinheit 7 einen Touchscreen 9 auf, der es erlaubt, einen landwirtschaftlichen Arbeitsauftrag und/oder ein einem landwirtschaftlichen Arbeitsauftrag entsprechendes bzw. zugeordnetes anbaubares Arbeitsaggregat 3a, 3b einzugeben oder auszuwählen. Die Eingabe oder Auswahl durch die Bedienperson kann mittels der Ein-/Ausgabeeinheit 7 hier und vorzugsweise textbasiert und/oder symbolbasiert und insbesondere geführt vorgenommen werden. Die Bedienperson hat also die Möglichkeit, einen konkreten landwirtschaftlichen Arbeitsauftrag und/oder ein konkretes Arbeitsaggregat 3a, 3b in Form eines Anbaugeräts im Steuer- und Regelsystem 2 festzulegen, was vorzugsweise durch Auswahl eines Arbeitsauftrags bzw. Arbeitsaggregats 3a, 3b aus einer Gruppe von im Steuer- und Regelsystem 2 vorgegebenen Arbeitsaufträgen bzw. Arbeitsaggregaten 3a, 3b erfolgt.

Beispielsweise wird auf dem Touchscreen 9 eine Darstellung der landwirtschaftlichen Arbeitsmaschine 1 und/oder mindestens eines anbaubaren oder angebauten Arbeitsaggregats 3a, 3b optisch angezeigt, was eine besonders intuitive Bedienung durch die Bedienperson erlaubt.

Grundsätzlich ist es aber auch denkbar, dass ein angebautes Arbeitsaggregat 3a, 3b durch das mechanische Anbauen und/oder elektrische Anschließen an die landwirtschaftliche Arbeitsmaschine 1 vom Steuer- und Regelsystem 2 automatisch erkannt wird. So kann das jeweilige Arbeitsaggregat 3a, 3b mit der landwirtschaftlichen Arbeitsmaschine 1 vorzugsweise über eine drahtgebundene Datenverbindung, beispielsweise ISOBUS-Verbindung, oder über eine drahtlose Verbindung, beispielsweise Funk- bzw. WLAN-Verbindung, verbunden werden und kommunizieren, wodurch das Steuer- und Regelsystem 2 das konkret angebaute Arbeitsaggregat 3a, 3b selbsttätig erkennt und insbesondere auch einen konkreten zugeordneten landwirtschaftlichen Arbeitsauftrag festlegt und der Bedienperson ggfs. anzeigt. Daraufhin wird das Steuerungsprogramm, ggfs. unter Berücksichtigung einer vorausgehenden Bestätigung und/oder weiterer Eingaben durch die Bedienperson, konfiguriert und/oder in das jeweilige Steuergerät 6a, 6b, 6c geladen, was ebenfalls insbesondere automatisiert erfolgt.

Das dann jeweils konfigurierte und/oder geladene Steuerungsprogramm nimmt dann, ebenfalls insbesondere automatisiert, eine Konfiguration der landwirtschaftlichen Arbeitsmaschine 1, beispielsweise des Regelungsverhaltens der landwirtschaftlichen Arbeitsmaschine 1, insbesondere eines Fahrerassistenzsystems 8, eines Hydrauliksystems, eines Reifendruckänderungssystems und/oder des Anhängerkupplungssystems und/oder eines oder mehrerer weiterer integrierter Arbeitsaggregate (hier nicht dargestellt), und/oder des anbaubaren oder angebauten Arbeitsaggregats 3a, 3b vor. Die Konfiguration des jeweiligen angebauten bzw. anbaubaren Arbeitsaggregats 3a, 3b erfolgt insbesondere durch Konfiguration des Steuergeräts 6a, 6b, 6c, insbesondere des jeweils dem Arbeitsaggregat 3a, 3b zugeordneten Steuergeräts 6a, 6b, 6c, womit das Steuerungs- und Regelungsverhalten des bzw. der internen Arbeitsaggregate (nicht dargestellt), und/oder des externen Arbeitsaggregats 3a, 3b entsprechend angepasst wird. Entsprechend lässt sich auch das Steuerungs- und Regelungsverhalten der landwirtschaftlichen Arbeitsmaschine 1 bzw. des Traktors 4 anpassen.

Das Konfigurieren und/oder Laden des Steuerungsprogramms für den jeweils konkreten Anwendungszweck kann zusätzlich noch durch ein oder mehrere Betriebsparameter der landwirtschaftlichen Arbeitsmaschine 1 und/oder Umgebungsparameter des jeweils dem Arbeitsauftrag zugeordneten Geländes 10 beeinflusst werden. Der bzw. die Betriebsparameter und/oder Umgebungsparameter können in einer internen oder externen Datenbank gespeichert sein oder während eines vorangegangenen landwirtschaftlichen Arbeitsauftrags gespeichert worden sein und können zum Konfigurieren und/oder Laden des Steuerungsprogramm zugrunde gelegt werden bzw. das Steuer- und Regelsystem kann darauf zugreifen.

Als beispielhafte und nicht abschließende Aufzählung sei als Betriebsparameter die durchschnittliche Fahrgeschwindigkeit bzw. Arbeitsgeschwindigkeit der landwirtschaftlichen Arbeitsmaschine 1, der durchschnittliche Leistungsbedarf des anbaubaren Arbeitsaggregats 3a, 3b, die durchschnittliche Leistungsschwankung des anbaubaren Arbeitsaggregats 3a, 3b, die Arbeitstiefe des jeweiligen anbaubaren Arbeitsaggregats 3a, 3b, das Gewicht der landwirtschaftlichen Arbeitsmaschine 1 und/oder das Gewicht des anbaubaren bzw. angebauten Arbeitsaggregats 3a, 3b genannt. Als beispielhafte und nicht abschließende Aufzählung sei als Umgebungsparameter das Vorhandensein oder Nichtvorhandensein eines Feldes, die Bodenart, der Bodenzustand, die Bodenfeuchte, die Hügeligkeit des Geländes 10, die Erntegutart, die Erntegutfeuchtigkeit und/oder das Vorhandensein oder Nichtvorhandensein eines Vorgewendes genannt.

Das vorschlagsgemäß in der landwirtschaftlichen Arbeitsmaschine 1 vorgesehene Steuer- und Regelsystem 2 und/oder das Steuerungsprogramm des jeweiligen Steuergeräts 6a, 6b, 6c ist dabei vorzugsweise derart ausgebildet, dass basierend auf dem mindestens einen Betriebsparameter und/oder Umgebungsparameter ein arbeitsauftragsspezifisches und/oder arbeitsaggregatspezifisches zu erwartendes Belastungsprofil erzeugbar ist. Das zu erwartende Belastungsprofil kann dann mittels der Ein-/Ausgabeeinheit 7 der Bedienperson angezeigt werden und insbesondere bei der Konfiguration des Fahrerassistenzsystems 8 berücksichtigt werden.

Hier und vorzugsweise ist das Steuer- und Regelsystem 2 zwischen einem Vorbereitungsmodus und einem Arbeitsmodus umschaltbar. In dem Vorbereitungsmodus wird das Konfigurieren und/oder Laden des Steuerungsprogramms wie zuvor beschrieben vorgenommen. Der Arbeitsmodus dient hier dazu, neben der tatsächlichen Ausführung des jeweiligen landwirtschaftlichen Arbeitsauftrags auch den oder die Betriebsparameter und/oder Umgebungsparameter zu erfassen und/oder zu speichern. Diese können dann unmittelbar während desselben landwirtschaftlichen Arbeitsauftrags zu einer weiteren Anpassung des jeweiligen Steuerungsprogramms oder für das Konfigurieren und/oder Laden eines Steuerungsprogramms im Vorbereitungsmodus für einen nachfolgenden landwirtschaftlichen Arbeitsauftrag berücksichtigt werden.

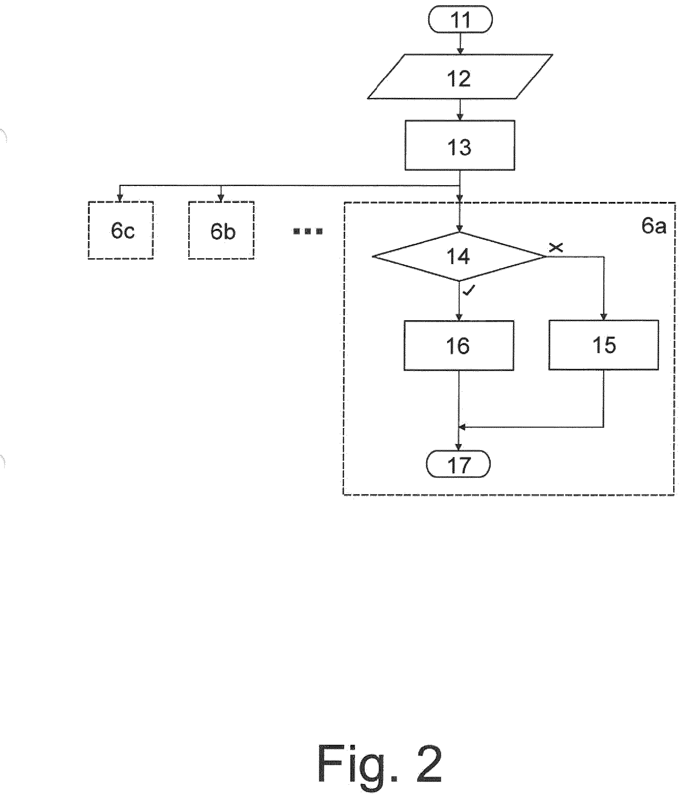

Im Folgenden sollen nun einige konkrete Anwendungsbeispiele beschrieben werden, die die Funktionsweise des Steuer- und Regelsystems 2 der landwirtschaftlichen Arbeitsmaschine 1 näher erläutern. Fig. 2 zeigt hierzu in Form eines Flussdiagramms eine beispielhafte Darstellung einzelner Verfahrensschritte, die vorschlagsgemäß vorgesehen sein bzw. durchgeführt werden können. Nach dem Start 11 der Programmierroutine wird hier beispielhaft eine Eingabe oder Auswahl 12 eines landwirtschaftlichen Arbeitsauftrags durch die Bedienperson gefordert, die über die beschriebene Ein-/Ausgabeeinheit 7 erfolgen kann. Basierend auf der Eingabe oder Auswahl 12 erfolgt dann durch das System automatisch die Auswahl 13 eines arbeitsauftragsspezifischen und somit auch arbeitsaggregatspezifischen Steuergeräts 6a, 6b, 6c, wobei anschließend automatisiert eine Entscheidung 14 von dem System getroffen wird, ob auftragsspezifische bzw. arbeitsaggregatspezifische Einstellungen vorhanden sind, d. h. gespeichert sind, oder nicht. In dem Fall, dass keine arbeitsauftragsspezifischen bzw. arbeitsaggregatspezifischen Einstellungen vorhanden sind, erfolgt das Laden 15 von Standardeinstellungen, anderenfalls das Laden 16 von konkreten arbeitsauftragsspezifischen bzw. arbeitsaggregatspezifischen Einstellungen. Die Programmierroutine endet dann, was in Fig. 2 durch das Element 17 dargestellt ist.

Durch das auf Basis der geladenen Einstellungen konfigurierte und/oder geladene Steuerungsprogramm kann beispielsweise ein gestuftes oder stufenloses Getriebe der landwirtschaftlichen Arbeitsmaschine 1 gesteuert und/oder das Fahrerassistenzsystem 8 der landwirtschaftlichen Arbeitsmaschine konfiguriert bzw. angepasst werden. Das Steuern des Getriebes insbesondere des Fahrantriebs der landwirtschaftlichen Arbeitsmaschine 1 bzw. das Anpassen des Fahrerassistenzsystems 8 erfolgt somit arbeitsaggregatspezifisch bzw. arbeitsauftragsspezifisch. Der Arbeitsauftrag ist beispielsweise ein Arbeitsauftrag gewählt aus der Gruppe umfassend "Frontladen von Schüttgut", "Stapeln von Gegenständen", "Silageschieben", "Bodenbearbeitung" und/oder "Transport". Das Arbeitsaggregat 3a, 3b ist beispielsweise ein Arbeitsaggregat 3a, 3b, das für einen der vorgenannten landwirtschaftlichen Arbeitsaufträge vorgesehen bzw. geeignet ist, d. h. einem der vorgenannten landwirtschaftlichen Arbeitsaufträge zugeordnet ist. Für den Arbeitsauftrag "Bodenbearbeitung" kann als zugeordnetes Arbeitsaggregat 3a beispielsweise ein Grubber 5a oder ein Pflug vorgesehen sein, wobei das Arbeitsaggregat 3a wie gesagt entweder automatisch erkannt oder von einer Bedienperson eingegeben oder ausgewählt wird (Fig. 1a). Für den Arbeitsauftrag "Frontladen von Schüttgut" ist das zugeordnete Arbeitsaggregat 3b beispielsweise eine Frontladeschaufel 5b, wobei auch das Arbeitsaggregat 3b entweder automatisch erkannt oder von einer Bedienperson eingegeben oder ausgewählt wird (Fig. 1b).

Durch die arbeitsaggregatspezifische bzw. arbeitsauftragsspezifische Konfigurierung des Fahrerassistenzsystems 8 bzw. Getriebes lässt sich entsprechend auch das Fahrverhalten der landwirtschaftlichen Arbeitsmaschine 1 anpassen. Beispielsweise lässt sich das Anfahr-, Wende-, Verzögerungs- und/oder Rückwärtsfahrverhalten an einen landwirtschaftlichen Arbeitsauftrag, eine Arbeitsstrategie, eine einen Arbeitsauftrag betreffende Bedingung und/oder ein anbaubares Arbeitsaggregat 3a, 3b anpassen. So ist es beispielsweise denkbar, für den landwirtschaftlichen Arbeitsauftrag "Frontladen von Schüttgut" ein relativ hartes bzw. direktes Verzögerungsverhalten vorzusehen, um zu vermeiden, dass beim Aufnehmen des Schüttguts die Räder durchdrehen, was Schlaglöcher verursachen würde. Bei dem landwirtschaftlichen Arbeitsauftrag "Bodenbearbeitung" ist eine weiche bzw. langsame Verzögerung der landwirtschaftlichen Arbeitsmaschine 1 gewünscht, um dadurch den Fahrkomfort zu erhöhen. Auch in dem Fall, dass ein Transport durchgeführt werden soll, ist ein weiches Verzögerungsverhalten bevorzugt, um gefährliche Fahrsituationen wie zum Beispiel ein Ausbrechen der landwirtschaftlichen Arbeitsmaschine 1 oder eines Hängers zu verhindern.

Das Steuer- und Regelsystem 2 und/oder das Steuerungsprogramm des jeweiligen Steuergeräts 6a, 6b, 6c kann auch derart ausgebildet sein, dass eine Änderung des Gewichts der landwirtschaftlichen Arbeitsmaschine 1 und/oder des Arbeitsaggregats 3a, 3b, die durch Auswahl eines bestimmten landwirtschaftlichen Arbeitsauftrags und/oder Arbeitsaggregats 3a, 3b bedingt ist, zu keiner Änderung des Fahrverhaltens führt. Insbesondere kann das Anfahr-, Wende-, Verzögerungs- und/oder Rückwärtsfahrverhalten unverändert bzw. konstant gehalten werden.

Des Weiteren ist es mit der vorschlagsgemäßen landwirtschaftlichen Arbeitsmaschine 1 möglich, insbesondere mittels des arbeitsaggregatspezifisch bzw. arbeitsauftragsspezifisch konfigurierten Fahrerassistenzsystems 8, eine Änderung des Ausgangsdrehmoments der landwirtschaftlichen Arbeitsmaschine 1 durch die Bedienperson bis zu einem gewissen Grad oder vollständig zuzulassen oder aber zu verhindern. So kann von dem Fahrerassistenzsystem 8 beispielsweise eine Änderung des Ausgangsdrehmoments der landwirtschaftlichen Arbeitsmaschine 1 zumindest bis zu einem gewissen Grad dann zugelassen werden, wenn als Arbeitsauftrag das "Frontladen von Schüttgut" und/oder das "Silageschieben" vorgesehen ist. Insbesondere kann das Fahrerassistenzsystem 8 "harte" Änderungen, d. h. direkte Änderungen, des Ausgangsdrehmoments zulassen oder aber mildert die Änderung des Ausgangsdrehmoments etwas ab ("weiche" Änderung). Bei dem Arbeitsauftrag "Bodenbearbeitung" ist es dagegen zur Steigerung der Effizienz bevorzugt, wenn die Bedienperson das Ausgangsdrehmoment der landwirtschaftlichen Arbeitsmaschine 1 nicht selbst ändern kann, was insbesondere bei schweren Bodenbearbeitungen von Vorteil ist.

Das Fahrerassistenzsystem 8 kann im arbeitsauftragsspezifisch bzw. arbeitsaggregatspezifisch konfigurierten Zustand auch auf externe Störungen bzw. Rahmenbedingungen reagieren (das Arbeitsaggregat 3a, 3b trifft auf den Boden, das Anhängergewicht ist relativ groß, zum Beispiel bei einem 30 Tonnen-Anhänger etc.). Hier kann über einen geschlossenen Regelkreis das Fahrverhalten, insbesondere die Fahrgeschwindigkeitssteuerung, optimiert werden.

Hinsichtlich der Zapfwellenverbindung zwischen der landwirtschaftlichen Arbeitsmaschine 1 und dem jeweiligen Arbeitsaggregat 3a, 3b wird vorzugsweise auch ermöglicht, das Einkuppelverhalten an das jeweilige Arbeitsaggregat 3a, 3b anzupassen. So ist bei Arbeitsaggregaten mit einer relativ großen Massenträgheit, wie beispielsweise bei einer Ballenpresse, ein anderes Einkuppelverhalten nötig als bei Arbeitsaggregaten mit einem niedrigen Massenträgheitsmoment, wie beispielsweise bei einem Düngemittelverteilaggregat.

Schließlich kann das entsprechend konfigurierte Fahrerassistenzsystem 8 auch das Hydrauliksystem, insbesondere den Ölumlauf (die Ölversorgung), eines angebauten Arbeitsaggregats 3a, 3b arbeitsauftragsspezifisch bzw. arbeitsaggregatspezifisch anpassen, insbesondere durch Anpassung der Motordrehzahl.

### Bezugszeichenliste

- 1: Landwirtschaftliche Arbeitsmaschine
- 2: Steuer- und Regelsystem
- 3a, 3b: Arbeitsaggregat
- 4: Traktor
- 5a: Grubber
- 5b: Frontladeschaufel
- 6a, 6b, 6c: Steuergerät
- 7: Ein-/Ausgabeeinheit
- 8: Fahrerassistenzsystem
- 9: Touchscreen
- 10: Gelände
- 11-17: Flussdiagramm-Elemente

## Patentansprüche

1. Landwirtschaftliche Arbeitsmaschine (1), insbesondere Traktor (4), mit einem Steuer- und Regelsystem (2) zur Steuerung und Regelung mindestens eines Arbeitsaggregats (3a, 3b) zur Durchführung oder Unterstützung eines landwirtschaftlichen Arbeitsauftrags, **dadurch gekennzeichnet, dass** das Steuer- und Regelsystem (2) mehrere Steuergeräte (6a, 6b, 6c) mit jeweils einem Steuerungsprogramm aufweist, wobei die Steuergeräte (6a, 6b, 6c) bzw. deren Steuerungsprogramme jeweils einem konkreten Arbeitsauftrag und/oder Arbeitsaggregat (3a, 3b) zugeordnet sind, und dass das jeweilige Steuerungsprogramm in Abhängigkeit eines landwirtschaftlichen Arbeitsauftrags, eines anbaubaren Arbeitsaggregats (3a, 3b) und/oder einer einen landwirtschaftlichen Arbeitsauftrag betreffenden Bedienereingabe konfigurierbar und/oder ladbar ist.

2. Landwirtschaftliche Arbeitsmaschine (1) nach Anspruch 1, **dadurch gekennzeichnet, dass** die landwirtschaftliche Arbeitsmaschine (1) eine Ein-/Ausgabeeinheit (7) zur Vornahme von einen landwirtschaftlichen Arbeitsauftrag betreffenden Eingaben durch eine Bedienperson und/oder zur Anzeige von Eingaben ermöglichenden virtuellen Bedienelementen und/oder zur Anzeige von vorzunehmenden Einstellungen und/oder vorgenommenen Eingaben entsprechenden Informationen aufweist.

3. Landwirtschaftliche Arbeitsmaschine (1) nach Anspruch 1 oder 2, **dadurch gekennzeichnet, dass** das Steuer- und Regelsystem (2) derart ausgebildet ist, dass das Konfigurieren und/oder Laden des Steuerungsprogramms des jeweiligen Steuergeräts (6a, 6b, 6c) automatisiert erfolgt, nachdem ein landwirtschaftlicher Arbeitsauftrag, eine einen landwirtschaftlichen Arbeitsauftrag betreffende Arbeitsstrategie, eine einen landwirtschaftlichen Arbeitsauftrag betreffende Bedingung und/oder ein anbaubares Arbeitsaggregat (3a, 3b) eingegeben oder ausgewählt worden ist, und/oder, nachdem ein anbaubares Arbeitsaggregat (3a, 3b) angebaut worden ist.

4. Landwirtschaftliche Arbeitsmaschine (1) nach einem der vorhergehenden Ansprüche, **dadurch gekennzeichnet, dass** das Steuer- und Regelsystem (2) derart ausgebildet ist, dass ein anbaubares Arbeitsaggregats (3a, 3b) durch Herstellen einer mechanischen Verbindung und/oder drahtgebundenen oder drahtlosen Datenverbindung zwischen landwirtschaftlicher Arbeitsmaschine (1) und jeweiligem anbaubarem Arbeitsaggregat (3a, 3b) automatisch erkannt wird.

5. Landwirtschaftliche Arbeitsmaschine (1) nach einem der vorhergehenden Ansprüche, **dadurch gekennzeichnet, dass** das konfigurierte und/oder geladene Steuerungsprogramm eine Konfiguration der landwirtschaftlichen Arbeitsmaschine (1) und/oder des anbaubaren Arbeitsaggregats (3a, 3b) vornimmt, und/oder, das Steuerungs- und Regelungsverhalten der landwirtschaftlichen Arbeitsmaschine (1) und/oder des anbaubaren Arbeitsaggregats (3a, 3b) an einen landwirtschaftlichen Arbeitsauftrag, eine einen landwirtschaftlichen Arbeitsauftrag betreffende Arbeitsstrategie, eine einen landwirtschaftlichen Arbeitsauftrag betreffende Bedingung und/oder ein anbaubares Arbeitsaggregat (3a, 3b) anpasst.

6. Landwirtschaftliche Arbeitsmaschine (1) nach einem der vorhergehenden Ansprüche, **dadurch gekennzeichnet, dass** eine interne oder externe Datenbank vorgesehen ist, in der mindestens ein Betriebsparameter der landwirtschaftlichen Arbeitsmaschine (1) und/oder ein Umgebungsparameter gespeichert und/oder speicherbar ist, der zum Konfigurieren und/oder Laden des Steuerungsprogramms zugrunde gelegt wird und/oder auf den das konfigurierte und/oder geladene Steuerungsprogramm zugreifen kann, wobei der Betriebsparameter die durchschnittliche Fahrgeschwindigkeit der landwirtschaftlichen Arbeitsmaschine (1), der durchschnittliche Leistungsbedarf des anbaubaren Arbeitsaggregats (3a, 3b), die durchschnittliche Leistungsschwankung des anbaubaren Arbeitsaggregats (3a, 3b), die Arbeitstiefe des anbaubaren Arbeitsaggregats (3a, 3b), das Gewicht der landwirtschaftlichen Arbeitsmaschine (1) und/oder das Gewicht des anbaubaren Arbeitsaggregats (3a, 3b) ist, und/oder, der Umgebungsparameter das Vorhandensein oder Nichtvorhandensein eines Feldes, die Bodenart, der Bodenzustand, die Bodenfeuchte, die Hügeligkeit des Geländes (10), die Erntegutart, die Erntegutfeuchtigkeit und/oder das Vorhandensein oder Nichtvorhandensein eines Vorgewendes ist.

7. Landwirtschaftliche Arbeitsmaschine (1) nach Anspruch 6, **dadurch gekennzeichnet, dass** das Steuer- und Regelsystem (2) und/oder das Steuerungsprogramm derart ausgebildet ist, dass basierend auf dem mindestens einen Betriebsparameter und/oder Umgebungsparameter ein arbeitsauftragsspezifisches und/oder arbeitsaggregatspezifisches zu erwartendes Belastungsprofil erzeugbar und/oder mittels der Ein-/Ausgabeeinheit (7) anzeigbar ist.

8. Landwirtschaftliche Arbeitsmaschine (1) nach einem der vorhergehenden Ansprüche, **dadurch gekennzeichnet, dass** das Steuer- und Regelsystem (2) zwischen einem Vorbereitungsmodus und einem Arbeitsmodus umschaltbar ist, wobei das Konfigurieren und/oder Laden des Steuerungsprogramms im Vorbereitungsmodus erfolgt, und/oder, das Erfassen und/oder Speichern des mindestens einen Betriebsparameters und/oder Umgebungsparameters im Arbeitsmodus erfolgt.

9. Landwirtschaftliche Arbeitsmaschine (1) nach einem der vorhergehenden Ansprüche, **dadurch gekennzeichnet, dass** der eingebbare oder auswählbare und/oder eingegebene oder ausgewählte landwirtschaftliche Arbeitsauftrag ein Arbeitsauftrag aus der Gruppe umfassend "Frontladen von Schüttgut", "Stapeln von Gegenständen", "Silageschieben", "Bodenbearbeitung", "Transport" ist.

10. Landwirtschaftliche Arbeitsmaschine (1) nach einem der vorhergehenden Ansprüche, **dadurch gekennzeichnet, dass** das eingebbare oder auswählbare und/oder eingegebene oder ausgewählte anbaubare Arbeitsaggregat (3a, 3b) ein für einen landwirtschaftlichen Arbeitsauftrag aus der Gruppe umfassend "Frontladen von Schüttgut", "Stapeln von Gegenständen", "Silageschieben", "Bodenbearbeitung", "Transport" vorgesehenes Arbeitsaggregat (3a, 3b) ist.

11. Landwirtschaftliche Arbeitsmaschine (1) nach einem der vorhergehenden Ansprüche, **dadurch gekennzeichnet, dass** durch das konfigurierte und/oder geladene Steuerungsprogramm ein gestuftes oder stufenloses Getriebe der landwirtschaftlichen Arbeitsmaschine (1) gesteuert und/oder ein Fahrerassistenzsystem (8) der landwirtschaftlichen Arbeitsmaschine (1) konfiguriert wird.

12. Landwirtschaftliche Arbeitsmaschine (1) nach einem der vorhergehenden Ansprüche, **dadurch gekennzeichnet, dass** durch das konfigurierte und/oder geladene Steuerungsprogramm und/oder durch das Steuern des Getriebes und/oder durch das konfigurierte Fahrerassistenzsystem (8) das Anfahr-, Wende-, Verzögerungs-, Beschleunigungs- und/oder Rückwärtsfahrverhalten, den Drehmomentaufbau, die Wahl der Getriebeübersetzung, die Wahl der Motordrehzahl, den Anfahrgang und/oder die Schaltstrategie der landwirtschaftlichen Arbeitsmaschine (1) an einen landwirtschaftlichen Arbeitsauftrag, eine einen landwirtschaftlichen Arbeitsauftrag betreffende Arbeitsstrategie, eine einen landwirtschaftlichen Arbeitsauftrag betreffende Bedingung und/oder ein anbaubares Arbeitsaggregat (3a, 3b) anpassbar ist.

13. Landwirtschaftliche Arbeitsmaschine (1) nach einem der vorhergehenden Ansprüche, **dadurch gekennzeichnet, dass** das Steuer- und Regelsystem (2) und/oder das Steuerungsprogramm derart ausgebildet ist, dass das Anfahr-, Wende-, Verzögerungs- Beschleunigungs- und/oder Rückwärtsfahrverhalten, der Drehmomentaufbau, die Wahl der Getriebeübersetzung, die Wahl der Motordrehzahl, der Anfahrgang und/oder die Schaltstrategie unabhängig von einer Änderung des Gewichts der landwirtschaftlichen Arbeitsmaschine (1) und/oder des anbaubaren Arbeitsaggregats (3a, 3b) konstant gehalten wird.

14. Landwirtschaftliche Arbeitsmaschine (1) nach einem der vorhergehenden Ansprüche, **dadurch gekennzeichnet, dass** das Steuer- und Regelsystem (2) und/oder das Steuerungsprogramm derart ausgebildet ist, dass bei eingegebenem oder ausgewähltem Arbeitsauftrag "Frontladen von Schüttgut" und/oder "Silageschieben" das Fahrerassistenzsystem (8) eine Änderung des Ausgangsdrehmoments der landwirtschaftlichen Arbeitsmaschine (1) durch die Bedienperson zumindest bis zu einem gewissen Grad oder vollständig zulässt, und/oder, bei eingegebenem oder ausgewähltem Arbeitsauftrag "Bodenbearbeitung" eine Änderung des Ausgangsdrehmoments der landwirtschaftlichen Arbeitsmaschine (1) durch die Bedienperson verhindert, wobei das Steuerungs- und Regelungsverhalten der landwirtschaftlichen Arbeitsmaschine (1) in Abhängigkeit des Ausgangsdrehmoments oder unabhängig vom Ausgangsdrehmoment erfolgt.

15. Landwirtschaftliche Arbeitsmaschine (1) nach einem der vorhergehenden Ansprüche, **dadurch gekennzeichnet, dass** das Fahrerassistenzsystem (8) durch das konfigurierte und/oder geladene Steuerungsprogramm auf externe Störungen reagiert, und/oder, die durchschnittliche Motordrehzahl der landwirtschaftlichen Arbeitsmaschine (1), den durchschnittlichen Leistungsbedarf des anbaubaren Arbeitsaggregats (3a, 3b), die durchschnittliche Leistungsschwankung des anbaubaren Arbeitsaggregats (3, 3b), und/oder den Ölumlauf der landwirtschaftlichen Arbeitsmaschine (1) anpasst an einen eingegebenen oder ausgewählten landwirtschaftlichen Arbeitsauftrag und/oder ein eingegebenes oder ausgewähltes anbaubares Arbeitsaggregat (3a, 3b) und/oder eine eingegebene oder ausgewählte oder einem landwirtschaftlichen Arbeitsauftrag zugeordnete Vorgewendesequenz.

16. Landwirtschaftliche Arbeitsmaschine (1) nach einem der vorhergehenden Ansprüche, **dadurch gekennzeichnet, dass** durch das konfigurierte und/oder geladene Steuerungsprogramm das Startverhalten und/oder Einkuppelverhalten der Zapfwelle an ein eingegebenes oder ausgewähltes anbaubares Arbeitsaggregat (3a, 3b) anpassbar ist.
ist.

## Claims

1. An agricultural working machine (1), in particular a tractor (4), with a management and control system (2) for managing and controlling at least one working assembly (3a, 3b) for carrying out or supporting an agricultural working assignment, **characterized in that** the management and control system (2) has a plurality of control devices (6a, 6b, 6c) with a respective control program, wherein the control devices (6a, 6b, 6c) or their control programs are respectively associated with a specific working assignment and/or working assembly (3a, 3b), and **in that** the respective control program can be configured and/or loaded as a function of an agricultural working assignment, an attachable working assembly (3a, 3b) and/or an operator input relating to an agricultural working assignment.

2. The agricultural working machine (1) according to claim 1, **characterized in that** the agricultural working machine (1) has an input/output unit (7) for making inputs relating to an agricultural working assignment by an operator and/or for displaying virtual operating elements allowing inputs and/or for displaying adjustments to make and/or information relating to the inputs made.

3. The agricultural working machine (1) according to claim 1 or claim 2, **characterized in that** the management and control system (2) is configured such that the configuration and/or loading of the control program for the respective control device (6a, 6b, 6c) is carried out in an automated manner after an agricultural working assignment, a working strategy relating to an agricultural working assignment, a condition relating to an agricultural working assignment and/or an attachable working assembly (3a, 3b) has been input or selected, and/or after an attachable working assembly (3a, 3b) has been attached.

4. The agricultural working machine (1) according to one of the preceding claims, **characterized in that** the management and control system (2) is configured such that an attachable working assembly (3a, 3b) is automatically detected by establishing a mechanical connection and/or hard-wired or wireless data connection between the agricultural working machine (1) and the respective attachable working assembly (3a, 3b).

5. The agricultural working machine (1) according to one of the preceding claims, **characterized in that** the configured and/or loaded control program configures the agricultural working machine (1) and/or of the attachable working assembly (3a, 3b), and/or adjusts the management and control performance of the agricultural working machine (1) and/or of the attachable working assembly (3a, 3b) to an agricultural working assignment, to a working strategy relating to an agricultural working assignment, to a condition relating to an agricultural working assignment and/or attachable working assembly (3a, 3b).

6. The agricultural working machine (1) according to one of the preceding claims, **characterized in that** an internal or external database is provided in which at least one operating parameter of the agricultural working machine (1) and/or an environmental parameter is stored and/or can be stored, which forms the basis of the configuration and/or loading of the control program and/or which the configured and/or loaded control program can access, wherein the operational parameter is the mean drive speed of the agricultural working machine (1), the mean power requirement of the attachable working assembly (3a, 3b), the mean power fluctuation of the attachable working assembly (3a, 3b), the working depth of the attachable working assembly (3a, 3b), the weight of the agricultural working machine (1) and/or the weight of the attachable working assembly (3a, 3b), and/or the environmental parameter is the presence or absence of a field, the type of ground, the state of the ground, the moisture content of the ground, the hilliness of the terrain (10), the type of harvested material, the moisture content of the harvested material and/or the presence or absence of a headland.

7. The agricultural working machine (1) according to claim 6, **characterized in that** the management and control system (2) and/or the control program is configured such that an expected working assignment-specific and/or working assembly-specific loading profile can be produced and/or displayed by means of the input/output unit (7) based on the at least one operational parameter and/or environmental parameter.

8. The agricultural working machine (1) according to one of the preceding claims, **characterized in that** the management and control system (2) can be switched between a preparation mode and a working mode, wherein the configuration and/or loading of the control program is carried out in the preparation mode, and/or the detection and/or storage of the at least one operational parameter and/or environmental parameter is carried out in the working mode.

9. The agricultural working machine (1) according to one of the preceding claims, **characterized in that** the working assignment which can be input or selected and/or has been input or selected is from the group comprising "front loading of bulk material", "stacking items", "silage pushing", "ground working", "transport".

10. The agricultural working machine (1) according to one of the preceding claims, **characterized in that** the attachable working assembly (3a, 3b) which can be input or selected and/or has been input or selected is a working assembly (3a, 3b) provided for an agricultural working assignment from the group comprising "front loading of bulk material", "stacking items", "silage pushing", "ground working", "transport".

11. The agricultural working machine (1) according to one of the preceding claims, **characterized in that** a stepped or continuous transmission of the agricultural working machine (1) is controlled and/or a driver assistance system (8) of the agricultural working machine (1) is configured by means of the configured and/or loaded control program.

12. The agricultural working machine (1) according to one of the preceding claims, **characterized in that**, by means of the configured and/or loaded control program and/or by means of controlling the transmission and/or by means of the configured driver assistance system (8), the starting, turning, deceleration, acceleration and/or reversing performance, the torque build-up, the choice of gear ratio, the choice of engine speed, the starting gear and/or the gear shift strategy of the agricultural working machine (1) can be adjusted to an agricultural working assignment, a working strategy relating to an agricultural working assignment, a condition relating to an agricultural working assignment and/or an attachable working assembly (3a, 3b).

13. The agricultural working machine (1) according to one of the preceding claims, **characterized in that** the management and control system (2) and/or the control program is configured such that the starting, turning, deceleration, acceleration and/or reversing performance, the torque build-up, the choice of gear ratio, the choice of engine speed, the starting gear and/or the gear shift strategy is kept constant independently of a variation in the weight of the agricultural working machine (1) and/or of the attachable working assembly (3a, 3b).

14. The agricultural working machine (1) according to one of the preceding claims, **characterized in that** the management and control system (2) and/or the control program is configured such that in the case of the input or selected working assignment of "front loading of bulk material" and/or "silage pushing", the driver assistance system (8) authorizes a variation to the output torque of the agricultural working machine (1) by the operator up to at least a certain degree or in its entirety, and/or, in the case of the input or selected working assignment of "ground work", prevents the output torque of the agricultural working machine (1) from being varied by the operator, wherein the control and management performance of the agricultural working machine (1) is executed as a function of the output torque or independently or the output torque.

15. The agricultural working machine (1) according to one of the preceding claims, **characterized in that** the driver assistance system (8) reacts to external perturbations by means of the configured and/or loaded control program and/or adjusts the mean engine speed of the agricultural working machine (1), the mean power requirement of the attachable working assembly (3a, 3b), the mean power fluctuation of the attachable working assembly (3, 3b) and/or the oil circulation of the agricultural working machine (1) to an input or selected agricultural working assignment and/or an input or selected attachable working assembly (3a, 3b) and/or an input or selected headland sequence or a headland sequence associated with an agricultural working assignment.

16. The agricultural working machine (1) according to one of the preceding claims, **characterized in that** the start performance and/or coupling performance of the power take-off shaft can be adjusted to an input or selected attachable working assembly (3a, 3b) by means of the configured and/or loaded control program.

## Revendications

1. Machine de travail agricole (1), en particulier tracteur (4), comprenant un système de commande et de régulation (2) pour commander et réguler au moins un organe de travail (3a, 3b) en vue d'accomplir ou d'assister une tâche agricole, **caractérisée en ce que** le système de commande et de régulation (2) comporte plusieurs appareils de commande (6a, 6b, 6c) avec respectivement un programme de commande, les appareils de commande (6a, 6b, 6c), respectivement leurs programmes de commande étant associés respectivement à une tâche concrète et/ou à un organe de travail (3a, 3b), et **en ce que** le programme de commande respectif est configurable et/ou chargeable en fonction d'une tâche agricole, d'un organe de travail attelable (3a, 3b) et/ou d'une entrée utilisateur relative à une tâche agricole.

2. Machine de travail agricole (1) selon la revendication 1, **caractérisée en ce que** la machine de travail agricole (1) comporte une unité d'entrée/sortie (7) pour procéder à des entrées relatives à une tâche agricole par une personne utilisatrice et/ou pour afficher des éléments d'utilisation virtuels permettant des entrées et/ou pour afficher des informations correspondant à des réglages à effectuer et/ou à des réglages effectués.

3. Machine de travail agricole (1) selon la revendication 1 ou 2, **caractérisée en ce que** le système de commande et de régulation (2) est conçu de façon que la configuration et/ou le chargement du programme de commande de l'appareil de commande respectif (6a, 6b, 6c) s'effectue automatiquement après qu'une tâche agricole, une stratégie de travail relative à une tâche agricole, une condition relative à une tâche agricole et/ou un organe de travail attelable (3a, 3b) a été entré ou sélectionné, et/ou après qu'un organe de travail attelable (3a, 3b) a été attelé.

4. Machine de travail agricole (1) selon une des revendications précédentes, **caractérisée en ce que** le système de commande et de régulation (2) est conçu de façon qu'un organe de travail attelable (3a, 3b) soit reconnu automatiquement lors de l'établissement d'une liaison mécanique et/ou d'une liaison de données filaire ou sans fil entre la machine de travail agricole (1) et l'organe de travail attelable respectif (3a, 3b).

5. Machine de travail agricole (1) selon une des revendications précédentes, **caractérisée en ce que** le programme de commande configuré et/ou chargé procède à une configuration de la machine de travail agricole (1) et/ou de l'organe de travail attelable (3a, 3b), et/ou adapte le comportement de commande et de régulation de la machine de travail agricole (1) et/ou de l'organe de travail attelable (3a, 3b) à une tâche agricole, à une stratégie de travail relative à une tâche agricole, à une condition relative à une tâche agricole et/ou à un organe de travail attelable (3a, 3b).

6. Machine de travail agricole (1) selon une des revendications précédentes, **caractérisée en ce qu'**il est prévu une banque de données interne ou externe dans laquelle est mémorisé et/ou mémorisable au moins un paramètre d'exploitation de la machine de travail agricole (1) et/ou un paramètre environnemental qui sert de base à la configuration et/ou au chargement du programme de commande et/ou auquel le programme de commande configuré et/ou chargé peut accéder, le paramètre d'exploitation étant la vitesse de marche moyenne de la machine de travail agricole (1), le besoin en puissance moyen de l'organe de travail attelable (3a, 3b), la variation de puissance moyenne de l'organe de travail attelable (3a, 3b), la profondeur de travail de l'organe de travail attelable (3a, 3b), le poids de la machine de travail agricole (1) et/ou le poids de l'organe de travail attelable (3a, 3b), et/ou le paramètre environnemental étant la présence ou la non-présence d'un champ, le type de sol, l'état du sol, l'humidité du sol, le vallonnement du terrain (10), le type de produit récolté, l'humidité du produit récolté et/ou la présence ou la non-présence d'une tournière.

7. Machine de travail agricole (1) selon la revendication 6, **caractérisée en ce que** le système de commande et de régulation (2) et/ou le programme de commande est conçu de façon que, sur la base du au moins un paramètre d'exploitation et/ou paramètre environnemental, un profil de charge escompté spécifique à la tâche et/ou spécifique à l'organe de travail puisse être généré et/ou affiché au moyen de l'unité d'entrée/sortie (7).

8. Machine de travail agricole (1) selon une des revendications précédentes, **caractérisée en ce que** le système de commande et de régulation (2) est commutable entre un mode de préparation et un mode de travail, la configuration ou le chargement du programme de commande s'effectuant en mode de préparation, et/ou la détection et/ou la mémorisation du au moins un paramètre d'exploitation et/ou paramètre environnemental s'effectuant en mode de travail.

9. Machine de travail agricole (1) selon une des revendications précédentes, **caractérisée en ce que** la tâche agricole entrable ou sélectionnable et/ou entrée ou sélectionnée est une tâche provenant du groupe incluant « chargement frontal de matière en vrac », « empilage d'objets », « poussage d'ensilage », « travail du sol », « transport ».

10. Machine de travail agricole (1) selon une des revendications précédentes, **caractérisée en ce que** l'organe de travail attelable (3a, 3b) entrable ou sélectionnable et/ou entré ou sélectionné est un organe de travail (3a, 3b) prévu pour une tâche agricole provenant du groupe incluant « chargement frontal de matière en vrac », « empilage d'objets », « poussage d'ensilage », « travail du sol », « transport ».

11. Machine de travail agricole (1) selon une des revendications précédentes, **caractérisée en ce que** par l'intermédiaire du programme de commande configuré et/ou chargé est commandée une transmission étagée ou à variation continue de la machine de travail agricole (1) et/ou est configuré un système d'assistance à la conduite de la machine de travail agricole (1).

12. Machine de travail agricole (1) selon une des revendications précédentes, **caractérisée en ce que** par l'intermédiaire du programme de commande configuré et/ou chargé et/ou par l'intermédiaire de la commande de la transmission et/ou par l'intermédiaire du système d'assistance à la conduite (8), le comportement de démarrage, de retournement, de décélération, d'accélération et/ou de marche arrière, l'établissement du couple, le choix du rapport de transmission, le choix du régime-moteur, le rapport de démarrage et/ou la stratégie de changement de vitesses de la machine de travail agricole (1) peuvent être adaptés à une tâche agricole, à une stratégie de travail relative à une tâche agricole, à une condition relative à une tâche agricole et/ou à un organe de travail attelable (3a, 3b).

13. Machine de travail agricole (1) selon une des revendications précédentes, **caractérisée en ce que** le système de commande et de régulation (2) et/ou le programme de commande sont conçus de façon que le comportement de démarrage, de retournement, de décélération, d'accélération et/ou de marche arrière, l'établissement du couple, le choix du rapport de transmission, le choix du régime-moteur, le rapport de démarrage et/ou la stratégie de changement de vitesses soient maintenus constants indépendamment d'une variation du poids de la machine de travail agricole (1) et/ou de l'organe de travail attelable (3a, 3b).

14. Machine de travail agricole (1) selon une des revendications précédentes, **caractérisée en ce que** le système de commande et de régulation (2) et/ou le programme de commande sont conçus de façon que si la tâche entrée ou sélectionnée est « chargement frontal de matière en vrac » et/ou « poussage d'ensilage », le système d'assistance à la conduite (8) permette, au moins jusqu'à un certain degré ou entièrement, une modification du couple de sortie de la machine de travail agricole (1) par la personne utilisatrice, et/ou si la tâche entrée ou sélectionnée est « travail du sol », il interdise une modification du couple de sortie de la machine de travail agricole (1) par la personne utilisatrice, le comportement de commande et de régulation de la machine de travail agricole (1) étant géré en fonction du couple de sortie ou indépendamment du couple initial.

15. Machine de travail agricole (1) selon une des revendications précédentes, **caractérisée en ce que**, par l'intermédiaire du programme de commande, le système d'assistance à la conduite (8) réagit à des perturbations extérieures et/ou adapte le régime-moteur moyen de la machine de travail agricole (1), le besoin en puissance moyen de l'organe de travail attelable (3a, 3b), la variation de puissance moyenne de l'organe de travail attelable (3, 3b) et/ou la circulation d'huile de la machine de travail agricole (1) à une tâche agricole entrée ou sélectionnée et/ou à un organe de travail attelable entrée ou sélectionné (3a, 3b) et/ou à une séquence de tournière entrée ou sélectionnée ou associée à une tâche agricole.

16. Machine de travail agricole (1) selon une des revendications précédentes, **caractérisée en ce que** par l'intermédiaire du programme de commande configuré et/ou chargé, le comportement de démarrage et/ou le comportement d'accouplement de l'arbre de prise de force est adaptable à un organe de travail attelable entré ou sélectionné (3a, 3b).
